(19) Europäisches Patentamt
European Patent Office
Office européen des brevets

(11) **EP 4 159 916 A1**

(12) **EUROPEAN PATENT APPLICATION**
published in accordance with Art. 153(4) EPC

(43) Date of publication:
**05.04.2023 Bulletin 2023/14**

(21) Application number: **21813873.3**

(22) Date of filing: **20.05.2021**

(51) International Patent Classification (IPC):
*D06N 3/12* (2006.01)      *C08K 7/02* (2006.01)
*C08L 1/00* (2006.01)      *C08L 77/04* (2006.01)
*C08L 93/00* (2006.01)

(52) Cooperative Patent Classification (CPC):
**C08K 7/02; C08L 1/00; C08L 77/04; C08L 93/00; D06N 3/12**

(86) International application number:
**PCT/JP2021/019242**

(87) International publication number:
**WO 2021/241409 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2020 JP 2020090387**

(71) Applicant: **FUJIFILM Corporation**
**Tokyo 106-8620 (JP)**

(72) Inventors:
• **HOKAZONO Hirohisa**
**Ashigarakami-gun, Kanagawa 258-8577 (JP)**
• **GOTO Shun**
**Ashigarakami-gun, Kanagawa 258-8577 (JP)**
• **NAKAMURA Sohichiro**
**Ashigarakami-gun, Kanagawa 258-8577 (JP)**

(74) Representative: **Hoffmann Eitle**
**Patent- und Rechtsanwälte PartmbB**
**Arabellastraße 30**
**81925 München (DE)**

(54) **COMPOSITION, SHEET-SHAPED MOLDED BODY, ARTIFICIAL LEATHER, AND SHEET-SHAPED MOLDED BODY PRODUCTION METHOD**

(57)      An object of the present invention is to provide a composition capable of realizing an excellent matt tone of a leather surface in a case of being used as a synthetic leather or an artificial leather, a sheet-shaped molded body, an artificial leather, and a manufacturing method of a sheet-shaped molded body. The composition of the present invention is a composition used for a synthetic leather or an artificial leather, the composition containing a polypeptide, a fibrous substance other than the polypeptide, and, a plasticizer.

**Description**

**BACKGROUND OF THE INVENTION**

1. Field of the Invention

The present invention relates to a composition, a sheet-shaped molded body, an artificial leather, and a manufacturing method of a sheet-shaped molded body.

2. Description of the Related Art

Since an artificial leather or a synthetic leather has a texture and durability comparable to that of natural leather, the artificial leather or the synthetic leather have been widely used as a fashion material and an interior material.
In particular, a natural leather-like artificial leather, which is composed of a fiber entangled body mainly composed of ultrafine fibers, and a polymer elastic body, has excellent characteristics compared to the natural leather, such as high durability and uniformity of quality, and the natural leather-like artificial leather is used not only as a material for clothing, but also in various fields such as vehicle interior materials, interiors, shoes, and clothing.
For example, JP1997-076403A (JP-H09-076403A) discloses a sheet for thermoforming, which has a synthetic leather or an artificial leather in which a fine powder of a natural organic substance is blended, (claim 1 and claim 4), and discloses that at least one selected from the group consisting of a natural leather powder, a silk powder, and a cellulose powder is used as the natural organic substance (claim 2).

**SUMMARY OF THE INVENTION**

In a case where the sheet for thermoforming disclosed in JP1997-076403A (JP-H09-076403A) is studied, the present inventors have found that there is room for improvement in degree of matt tone on a leather surface in a case of being used as the synthetic leather or the artificial leather.
Therefore, an object of the present invention is to provide a composition capable of realizing an excellent matt tone of a leather surface in a case of being used as a synthetic leather or an artificial leather, a sheet-shaped molded body, an artificial leather, and a manufacturing method of a sheet-shaped molded body.
As a result of intensive studies to achieve the above-described objects, the present inventors have found that a composition containing a polypeptide, a fibrous substance other than the polypeptide, and a plasticizer can realize an excellent matt tone of a leather surface in a case of being used as a synthetic leather or an artificial leather, and thus completed the present invention.
That is, the present inventors have found that the above-described object can be achieved by adopting the following configurations.

[1] A composition used for a synthetic leather or an artificial leather, the composition comprising:

a polypeptide;
a fibrous substance other than the polypeptide; and
a plasticizer.

[2] The composition according to [1], further comprising:
a crosslinking agent.
[3] The composition according to [2],
in which the crosslinking agent is a triazine-based compound or a vinyl sulfone-based compound.
[4] The composition according to any one of [1] to [3],
in which the fibrous substance is nanofibers.
[5] The composition according to any one of [1] to [4],
in which an average fiber length of the fibrous substance is 2 to 500 $\mu$m.
[6] The composition according to any one of [1] to [5],
in which an average fiber diameter of the fibrous substance is 1 to 400 nm.
[7] The composition according to any one of [1] to [6],
in which an aspect ratio of the fibrous substance is 100 or more.
[8] The composition according to any one of [1] to [7],
in which the fibrous substance is cellulose nanofibers.
[9] The composition according to any one of [1] to [8],

in which the polypeptide includes a recombinant protein.

[10] The composition according to any one of [1] to [9],

in which the plasticizer is at least one of diglycerol or triglycerol.

[11] A sheet-shaped molded body formed of the composition according to any one of [1] to [10].

[12] The sheet-shaped molded body according to [11],

in which an arithmetic average roughness of a surface of the sheet-shaped molded body is 2.0 to 15 μm.

[13] An artificial leather comprising:

a nonwoven fabric; and

a polypeptide, a fibrous substance other than the polypeptide, and a plasticizer, which are applied to the nonwoven fabric by using the composition according to any one of [1] to [10].

[14] A manufacturing method of a sheet-shaped molded body, comprising:

a coating step of applying the composition according to any one of [1] to [10] to form a coating film; and

a drying step of drying the coating film after the coating step to form a sheet-shaped molded body.

According to the present invention, it is possible to provide a composition capable of realizing an excellent matt tone of a leather surface in a case of being used as a synthetic leather or an artificial leather, a sheet-shaped molded body, an artificial leather, and a manufacturing method of a sheet-shaped molded body.

## DESCRIPTION OF THE PREFERRED EMBODIMENTS

Hereinafter, the details of the present invention will be described.

The description of the constitutional requirements described below may be made on the basis of representative embodiments of the present invention, but it should not be construed that the present invention is limited to those embodiments.

In this specification, the numerical range expressed by using "to" means a range including the numerical values before and after "to" as the lower limit value and the upper limit value.

In addition, in this specification, for each component, one kind of substance corresponding to each component may be used alone, or two or more kinds thereof may be used in combination. Here, in a case where two or more kinds of substances are used in combination for each component, the content of the component indicates the total content of the substances used in combination, unless otherwise specified.

[Composition]

A composition according to an embodiment of the present invention is a composition used for a synthetic leather or an artificial leather, the composition containing a polypeptide, a fibrous substance other than the polypeptide, and, a plasticizer.

In the present invention, as described above, a composition containing a polypeptide, a fibrous substance other than the polypeptide, and a plasticizer can realize an excellent matt tone of a leather surface in a case of being used as a synthetic leather or an artificial leather.

A reason for achieving such an effect is not clear in detail, but is presumed to be as follows by the present inventors.

First, it is considered that the polypeptide is a substitute for the dermal (collagen) which is a raw material of leather.

By blending the plasticizer, a texture close to that of natural leather can be obtained, and by blending the fibrous substance, the fibrous substance aggregates or precipitates in the vicinity of a surface layer during the manufacturing of the synthetic leather or the artificial leather. As a result, it is considered that drying of the surface layer progressed slowly, which suppresses occurrence of gloss, so that an excellent matt tone of a leather surface can be realized.

Hereinafter, the polypeptide, the fibrous substance, and the plasticizer contained in the sheet-shaped molded body according to the embodiment of the present invention will be described in detail.

[Polypeptide]

The polypeptide contained in the composition according to the embodiment of the present invention is not particularly limited as long as it can form a film by coating.

In addition, a weight-average molecular weight of the above-described polypeptide is preferably 20,000 to 1,000,000 and more preferably 25,000 to 95,000.

Here, the weight-average molecular weight (Mw) is a value measured under the following conditions using a gel permeation chromatograph (GPC) method.

· Solvent (eluent): 0.1 mol/L phosphate buffer (pH: 6.8)
. Device name: AQUITY UPLC system Empower 2 manufactured by Waters
. Column: SB-804 HQ (Shodex)
· Column temperature: 50°C
· Sample concentration: 1 g/L
· Flow rate: 1 mL/min
· Calibration curve: standard polyethylene oxide, polyethylene glycol

1. Poly(ethylene oxide) (MW: 594,000)
2. Poly(ethylene oxide) (MW: 145,000)
3. Poly(ethylene oxide) (MW: 73,000)
4. Poly(ethylene oxide) (MW: 40,000)
5. Poly(ethylene oxide) (MW: 18,000)
6. Poly(ethylene glycol) (MW: 3,000)
7. Poly(ethylene glycol) (MW: 600)
8. Ethylene glycol (MW: 62)

Specific examples of the above-described polypeptide include gelatin, collagen, protamine, polyarginine, and a gene recombinant of an amino acid sequence derived from a partial amino acid sequence thereof.

These may be used alone or in combination of two or more. For example, gelatin and a recombinant protein may be used in combination.

Among these, gelatin, collagen, or a recombinant protein is preferable.

The origin of gelatin or collagen is not particularly limited, but is preferably bovine, porcine, mouse, or rat. Bovine is more preferable. In addition, one animal species may be used as the origin of collagen, or two or more species may be combined.

The polypeptide which can be used in the present invention may be pre-crosslinked or not pre-crosslinked, but is preferably pre-crosslinked.

Here, the pre-crosslinking means that the polypeptide is crosslinked in advance before being mixed with the fibrous substance other than the polypeptide, the plasticizer, and any crosslinking agent.

As a method of the pre-crosslinking, a known method such as a thermal crosslinking, a chemical crosslinking, a crosslinking by aldehydes (for example, formaldehyde, glutaraldehyde, and the like), a crosslinking by a condensing agent (carbodiimide, cyanamide, and the like), an enzymatic crosslinking, a photo-crosslinking, an UV crosslinking, a hydrophobic interaction, a hydrogen bonding, and an ionic interaction can be used.

Examples of the photo-crosslinking include light irradiation to a polymer into which a photoreactive group has been introduced and light irradiation in the presence of a photosensitizer. Examples of the photoreactive group include a cinnamyl group, a coumarin group, a dithiocarbamyl group, a xanthene coloring agent, and camphorquinone.

In a case of performing the crosslinking by an enzyme, the enzyme is not particularly limited as long as it has a crosslinking action between polypeptides, and examples thereof include transglutaminase and laccase.

Specific examples of a protein enzymatically crosslinking by the transglutaminase are not limited as long as it is a protein having a lysine residue and a glutamine residue.

The transglutaminase may be derived from mammal or microorganism, and specific examples thereof include ACTIVA series manufactured by Ajinomoto Co., Inc.; transglutaminase derived from mammal, which is commercially as a reagent, such as transglutaminase derived from guinea pig liver, transglutaminase derived from goat, and transglutaminase derived from rabbit, which is manufactured by Oriental Yeast Co., ltd., manufactured by Upstate USA Inc., manufactured by Biodesign International, and the like; and human-derived blood coagulation factor (Factor XIIIa, Haematologic Technologies, Inc.).

The pre-crosslinking of the polypeptide includes two steps, a step of mixing a solution of the polypeptide and a crosslinking agent and a step of reacting the uniform solution thereof.

In the present invention, a mixing temperature in a case of treating the polypeptide with the crosslinking agent is not particularly limited as long as the solution can be uniformly stirred, but is preferably 0°C to 40°C, more preferably 0°C to 30°C, still more preferably 3°C to 25°C, even more preferably 3°C to 15°C, and still even more preferably 3°C to 10°C, and particularly preferably 3°C to 7°C.

The temperature can be increased after stirring the polypeptide and the crosslinking agent. A reaction temperature is not particularly limited as long as the crosslinking proceeds, but in consideration of denaturation and decomposition of the polypeptide, is substantially 0°C to 60°C, more preferably 0°C to 40°C, still more preferably 3°C to 25°C, even more preferably 3°C to 15°C, still even more preferably 3°C to 10°C, and particularly preferably 3°C to 7°C.

In the present invention, from the reason that the texture can be adjusted by using a protein with uniform sequences, the above-described polypeptide preferably contains the recombinant protein.

<Recombinant protein>

Hereinafter, the recombinant protein will be described.

The recombinant protein is a polypeptide having an amino acid sequence derived from organism which is produced by a gene recombination technique.

The amino acid sequence of the recombinant protein is not particularly limited, and from the reason that it is a substitute for cutis (collagen) which is a raw material of leather, collagen, gelatin, or a variant thereof is preferable.

The recombinant protein may contain a single sequence of naturally occurring collagen, or may contain a plurality of sequences of collagen in a bonded state.

The recombinant protein may have a repetition of a sequence represented by Gly-X-Y (hereinafter, also abbreviated as a "GXY sequence") characteristic of collagen.

Here, a plurality of Gly-X-Y's may be the same or different from each other.

In Gly-X-Y, Gly represents glycine, and X and Y represent any amino acid (preferably, any amino acid other than glycine).

The GXY sequence characteristic of collagen is a partial structure in an amino acid composition and sequence of gelatin and collagen, which is very specific as compared with other proteins.

In this portion, glycine occupies approximately one-third of the whole, and the amino acid sequence is one in three repetitions.

The amino acid represented by X and Y includes a large amount of iminoic acid (proline and oxyproline), and it is preferable to occupy 10% to 45% of the total recombinant protein.

In the recombinant protein, preferably 80% or more, still more preferably 95% or more, and most preferably 99% or more of amino acids of the sequence are the GXY sequence.

The organism from which the recombinant protein is derived is not particularly limited, but is preferably mammal or reptile. Species from which these recombinant proteins are derived are not limited to existing species, and may include extinct species. In addition, the species from which these recombinant proteins are derived may be used alone or in combination of two or more species. Examples of the existing species include elephants, crocodile, hippo, rhinoceros, armadillo, tiger, lion, leopard, cheetah, whale, wolf, shark, ray, lizard, panda, iguana, jaguar, dugong, bear, gorilla, seal, snake, and ostrich. Examples of the extinct species include mammoth, Palaeoloxodon naumanni, mastodon, saber tiger, tyrannosaurus, trikeratops, stegosaurus, pteranodon, and ancestral bird.

The recombinant protein which can be used in the present invention can be produced by a gene recombination technique known to those skilled in the art, and for example, the recombinant protein can be produced according to methods described in EP1014176A2, US6992172B, WO2004/85473A, WO2008/103041A, and the like.

Specifically, a gene encoding an amino acid sequence of a specific recombinant protein is obtained, incorporated into an expression vector to prepare a recombinant expression vector, and introduced into an appropriate host to prepare a transformant. Since a recombinant protein is produced by culturing the resulting transformant in an appropriate culture medium, by recovering the recombinant protein produced from the culture, the recombinant protein which can be used in the present invention can be prepared.

In the present invention, a content of the above-described polypeptide is preferably 40% to 95% by mass, more preferably 45% to 90% by mass, and still more preferably 50% to 85% by mass with respect to the total mass of the solid content of the composition.

[Fibrous substance]

The fibrous substance contained in the composition according to the embodiment of the present invention is not particularly limited as long as a length is 100 times or more the average value of outer diameters.

In the present invention, from the reason that it is possible to realize more excellent matt tone of the leather surface, an average fiber diameter of the fibrous substance is preferably 1 to 400 nm, more preferably 30 to 300 nm, and still more preferably 40 to 200 nm.

Here, the average fiber diameter of the fibrous substance is obtained as an arithmetic average value of measured values which are obtained by measuring fiber diameters of any number (for example, 20) of fibrous substances by observation with an electron microscope.

In the present invention, from the reason that it is possible to realize more excellent matt tone of the leather surface, an average fiber length of the fibrous substance is preferably 2 to 500 $\mu$m, more preferably 4 to 400 $\mu$m, and more preferably 6 to 300 $\mu$m.

In addition, the average fiber length of the fibrous substance may be 10 μm or more, 20 μm or more, 50 μm or more, or 80 μm or more.

In addition, the average fiber length of the fibrous substance may be 250 μm or less, 200 μm or less, 180 μm or less, or 150 μm or less.

Here, the average fiber length of the fibrous substance is obtained as an arithmetic average value of measured values which are obtained by measuring fiber lengths of any number (for example, 20) of fibrous substances by observation with an electron microscope.

In the present invention, from the reason that it is possible to realize more excellent matt tone of the leather surface, an aspect ratio (fiber length/fiber diameter) of the fibrous substance is preferably 100 or more, more preferably 100 to 3000, and still more preferably 150 to 2000.

In addition, the aspect ratio of the fibrous substance may be 200 or more, 300 or more, 400 or more, 500 or more, or 600 or more.

In addition, the aspect ratio of the fibrous substance may be 1800 or less, 1500 or less, 1300 or less, or 1000 or less.

Examples of the above-described fibrous substance include nanofibers.

Here, the above-described nanofibers may include fibers having a fiber diameter of 1 μm or more, as long as the average fiber diameter is less than 1 μm.

In addition, specific examples of the above-described nanofibers include cellulose nanofibers, chitin nanofibers, chitosan nanofibers, carbon nanofibers, glass nanofibers, metal oxide nanofibers, synthetic resin nanofibers, and aramid nanofibers.

Among these, from the reason that it is possible to realize more excellent matt tone of the leather surface, cellulose nanofibers are preferable.

<Cellulose nanofibers>

Examples of the cellulose nanofibers include plant-derived fibers included in wood, bamboo, hemp, jute, kenaf, cotton, beet pulp, potato pulp, agricultural waste, cloth, paper, and the like, and these may be used alone or in combination of two or more.

Examples of the wood include Sitka spruce, cedar, hinoki, eucalyptus, and acacia.

Examples of the paper include deinked waste paper, used cardboard waste paper, magazine, and copy paper.

Examples of the pulp include chemical pulp (kraft pulp (KP) and sulfite pulp (SP)), semi-chemical pulp (SCP), semi-ground pulp (CGP), chemi-mechanical pulp (CMP), groundwood pulp (GP), refiner mechanical pulp (RMP), thermomechanical pulp (TMP), and chemithermomechanical pulp (CTMP), which are obtained by chemically or mechanically pulping plant material or by a combination of both pulping.

The cellulose nanofibers may be chemically and/or physically modified to enhance functionality.

Here, examples of the chemical modification include adding a carboxy group, an acetyl group, a sulfate group, a sulfonic acid group, an acryloyl group, a methacryloyl group, a propionyl group, a propioloyl group, a butyryl group, a 2-butyryl group, a pentanoyl group, a hexanoyl group, a heptanoyl group, an octanoyl group, a nonanoyl group, a decanoyl group, a undecanoyl group, a dodecanoyl group, a myristoyl group, a palmitoyl group, a stearoyl group, a pivaloyl group, a benzoyl group, a naphthoyl group, a nicotinoyl group, an isonicotinoyl group, a furoyl group, an acyl group such as a cinnamoyl group, an isocyanate group such as a 2-methacryloyloxyethylisocyanoyl group, a methyl group, an ethyl group, a propyl group, a 2-propyl group, a butyl group, a 2-butyl group, a tert-butyl group, a pentyl group, a hexyl group, a heptyl group, an octyl group, a nonyl group, a decyl group, a undecyl group, a dodecyl group, a myristyl group, a palmityl group, an alkyl group such as a stearyl group, an oxirane group, an oxetane group, a thiirane group, a thietane group, and the like.

In addition, a usual method can be adopted for the chemical modification. That is, it is possible to perform a chemical modification by reacting cellulose with a chemical modifier. As necessary, a solvent or a catalyst may be used, or heating, depressurization, or the like may be performed.

Examples of the type of the chemical modifier include acid, acid anhydride, halogenating reagent, alcohol, isocyanato, alkoxysilane, and cyclic ether such as oxylane (epoxy). These may be used alone or in combination of two or more kinds thereof.

Examples of the acid include acetic acid, acrylic acid, methacrylic acid, propanoic acid, butanoic acid, 2-butanoic acid, and pentanoic acid.

In addition, after the chemical modification, it is preferable to perform washing thoroughly with water in order to terminate the reaction. In a case where a unreacted chemical modifier remains, it may cause coloring later or cause a problem in a case of compounding with the resin. It is preferable that the product is thoroughly washed with water and then replaced with an organic solvent such as alcohol. In this case, the cellulose is replaced by immersing in an organic solvent such as alcohol.

On the other hand, examples of the physical modification include a method of coating a surface of a metal or a ceramic material by a physical vapor deposition method (PVD method) such as vacuum deposition, ion plating, and sputtering, a chemical vapor deposition method (CVD method), and a plating method such as electroless plating and electrolytic plating.

A method for adjusting the average fiber diameter of the cellulose nanofibers is not particularly limited. For example, in a mechanical disintegration method, it is possible to adjust the average fiber diameter of the cellulose nanofibers by the processing time and number of times of a ultra-high pressure homogenizer or a grinder used, and in a chemical disintegration method, it is possible to adjust the average fiber diameter of the cellulose nanofibers by the type of an oxidizing agent (for example, sodium hypochlorite and the like), concentration of catalyst (for example, 2,2,6,6-tetramethyl-1-piperidinyloxy (TEMPO) catalyst and the like), reaction time, or the like.

A method for preparing the cellulose nanofibers is not particularly limited, and a method of mechanically or chemically crushing the cellulose nanofibers is preferable.

Examples of the method of the mechanical crushing include a method of defibrating an aqueous suspension or slurry of a cellulose fiber-containing material by mechanically grinding or beating it with a refiner, high-pressure homogenizer, grinder, uniaxial or multiaxial kneader, beads mill, or the like. Examples of the machine processing method include JP5500842B, JP5283050B, JP5207246B, JP5170193B, JP5170153B, JP5099618B, JP4845129B, JP4766484B, JP4724814B, JP4721186B, JP4428521B, WO2011/068023A, JP5477265B, and JP2014-84434A.

On the other hand, as the method of the chemical crushing, for example, a cellulosic raw material is oxidized using an oxidizing agent in the presence of an N-oxyl compound and a bromide and/or an iodide, and the oxidized cellulose is subjected to wet pulverization to defibrate into nanofibers. Examples of the machine processing method include methods described in JP5381338B, JP4981735B, JP5404131B, JP5329279B, JP5285197B, JP5179616B, JP5178931B, JP5330882B, JP5397910B, and the like.

In the present invention, a content of the above-described fibrous compound is preferably 0.05% to 10% by mass, more preferably 0.1% to 8% by mass, and still more preferably 0.2% to 5% by mass with respect to the total mass of the solid content of the composition.

[Plasticizer]

The plasticizer contained in the composition according to the embodiment of the present invention is not particularly limited.

As the above-described plasticizer, a hydrophilic plasticizer may be used, or a hydrophobic plasticizer may be used.

Specific examples of the above-described hydrophilic plasticizer include

polyhydric alcohols such as glycerol (glycerin), diglycerol, triglycerol, polyglycerol (for example, tetraglycerol, hexaglycerol, decaglycerol, or a mixture thereof), polyethylene glycol, polypropylene glycol, mannitol, sorbitol, and pentaerythritol; and
saccharides such as sugar (for example, sucrose, coupling sugar, fructooligosaccharide, palatinose, and the like), starch sugar (for example, glucose, maltose, powdered syrup, starch syrup, isomerized sugar (fructose), and the like), lactose (for example, lactose, isomerized lactose (lactulose), reduced lactose (lactitol), and the like), honey, and sugar alcohol (for example, sorbitol, mannitol, reduced maltose starch syrup (maltitol), reduced starch saccharification product, xylitol, reduced palatinose, erythritol, and the like).

Specific examples of the above-described hydrophobic plasticizer include phthalic acid diesters such as dibutyl phthalate and diheptyl phthalate;

aliphatic dicarboxylic acid esters such as butyl glycol adipate and dibutyl sebacate;
epoxidized triglycerides such as epoxidized soybean oil;
phosphate esters such as tritolyl phosphate, trioctyl phosphate, and tritrischlorethyl phosphate; and
benzoic acid esters such as benzyl benzoate.

These plasticizers may be used alone or in combination of two or more.

In the present invention, from the reason that a flexible and textured surface can be obtained, the above-described plasticizer is preferably polyhydric alcohols. Among these, from the reason that a flexible and textured surface can be obtained and water resistance is also excellent, at least one of diglycerol or triglycerol is more preferable, and triglycerol is still more preferable.

In the present invention, from the viewpoint of workability and handleability, a molecular weight of the above-described plasticizer is preferably 90 to 1100 and more preferably 160 to 280.

In the present invention, a content of the above-described plasticizer is preferably 0.5% to 45% by mass, more preferably 2% to 40% by mass, and still more preferably 5% to 37% by mass with respect to the total mass of the solid content of the composition.

[Crosslinking agent]

From the reason that a leather surface having good durability and water resistance can be obtained, the composition according to the embodiment of the present invention preferably contains a crosslinking agent.

Specific examples of the above-described crosslinking agent include a tanning agent, an isocyanate-based compound, an oxazoline-based compound, a carbodiimide compound, an epoxy-based compound, a triazine-based compound, an aldehyde-based compound, a vinyl sulfone-based compound, and a calcium phosphate-based compound. Among these, a tanning agent, a triazine-based compound, or a vinyl sulfone-based compound is preferable, and from the viewpoint of water resistance, a triazine-based compound or a vinyl sulfone-based compound is more preferable.

The main type of the tanning agent is vegetable tannage, based on tannin as an active crosslinking agent; mineral tannage using various polyvalent metal salts, especially salts of chromium, aluminium, iron, or zirconium; and synthetic tannages referred to as "syntans". In addition, the tannin may be a natural tannin or a synthetic tannin.

In addition, the syntans include replacement syntans which are active tanning agents capable of tanning leather in a case of being used as a sole tannage (for example, by reacting with collagen at two or more sites to form crosslinks) and auxiliary syntans which are added to other tannages to modify the character of the leather but which are not in themselves active tanning agents.

The auxiliary syntans may be absorbed by the leather or may react with the collagen only in a partial portion.

For example, the syntans include various polymers and copolymers, such as those obtained by condensing formaldehyde with, for example, phenols and/or aryl sulphonates, and acrylate, methacrylate, acrylamide and/or acrylonitrile homopolymers and copolymers. Formaldehyde itself and dialdehydes such as glutaraldehyde are also used in tanning, usually in combination with other tannages.

The vinyl sulfone-based compound is a compound having a vinyl sulfone group.

In addition, since the vinyl sulfone-based compound is crosslinked by a covalent bond, water resistance is improved as described above.

Examples of the vinyl sulfone-based compound include 1,3-bis(vinylsulfonylacetamide)propane and 1,2-bis(vinylsulfonylacetamide)ethane, and among these, 1,3-bis(vinylsulfonylacetamide)propane is preferable.

In addition, the vinyl sulfone-based compound may be used alone or in combination of two or more kinds thereof, but it is preferable to use one kind alone.

The triazine-based compound is a compound having a 1,3,5-triazine skeleton.

In addition, since the triazine-based compound is crosslinked by a covalent bond, water resistance is improved as described above.

Among the triazine-based compounds, a chlorotriazine compound having an active halogen is preferable.

Examples of the triazine-based compound include 2,4-dichloro-6-hydroxy-1,3,5-triazine monosodium and 2,4,6-trichloro-1,3,5-triazine, and among these, 2,4-dichloro-6-hydroxy-1,3,5-triazine monosodium is preferable.

In addition, the triazine-based compound may be used alone or in combination of two or more kinds thereof, but it is preferable to use one kind alone.

In a case where the composition according to the embodiment of the present invention contains the above-described crosslinking agent, a content of the crosslinking agent is preferably 0.5% to 20% by mass, more preferably 1% to 15% by mass, and still more preferably 1.5% to 10% by mass with respect to the total mass of the solid content of the composition.

[Solvent]

From the reason that it is possible to form a product by applying to various substrate surfaces, the composition according to the embodiment of the present invention preferably contains a solvent.

The above-described solvent is not particularly limited, and water, an organic solvent, or a mixed solvent obtained by combining these can be used, but it is preferable to use water.

In the above-described mixed solvent, a content of the organic solvent is preferably 0% to 20% by mass, more preferably 0% to 10% by mass, and still more preferably 0% to 5% by mass with respect to the total mass of the solvent.

Examples of the organic solvent include alcohol-based solvents such as methanol, ethanol, n-propanol, isopropanol, n-butanol, isobutanol, sec-butanol, tert-butanol, n-pentanol, isopentanol, phenylethyl alcohol, capryl alcohol, lauryl alcohol, and myristyl alcohol; glycol ether-based solvents such as methyl cellosolve, ethyl cellosolve, ethylene glycol dimethyl ether, ethylene glycol diethyl ether, propylene glycol monomethyl ether, propylene glycol monoethyl ether, propylene glycol monopropyl ether, propylene glycol dimethyl ether, propylene glycol diethyl ether, ethylene glycol monobutyl ether, diethylene glycol monobutyl ether, triethylene glycol monobutyl ether, tetraethylene glycol monobutyl ether, and dipropylene glycol monobutyl ether; and hydrophilic solvents such as 10% denatonium benzoate alcohol solution, geraniol, octaacetylated sucrose, brucine, linalool, linalyl acetate, and acetic acid.

[Other additives]

The composition according to the embodiment of the present invention may contain, for example, other additives such as fats and oils, an antibacterial agent, a dye, a pigment, and a fragrance. Examples thereof include carbon black as a kind of the pigment.

[Sheet-shaped molded body]

A sheet-shaped molded body according to an embodiment of the present invention is a sheet-shaped molded body formed of the above-described composition according to the embodiment of the present invention.

That is, the sheet-shaped molded body according to the embodiment of the present invention contains the polypeptide, the fibrous substance other than the polypeptide, and the plasticizer, which are contained in the above-described composition according to the embodiment of the present invention. In a case where the composition according to the embodiment of the present invention contains a crosslinking agent, the polypeptide contained in the sheet-shaped molded body is preferably a polypeptide in which a part or all of the polypeptide contained in the composition according to the embodiment of the present invention is crosslinked.

In the present invention, from the reason that it is possible to realize more excellent matt tone of the leather surface, an arithmetic average roughness (hereinafter, also abbreviated as "Ra") of a surface of the sheet-shaped molded body is preferably 2.0 to 15 μm and more preferably 4.0 to 10 μm.

Here, Ra refers to an "arithmetic average roughness" defined in JIS B0601:2001, and can be measured by a known determination device (for example, an atomic force microscope, a laser microscope, an electron beam microscope, an optical microscope, and the like).

A thickness of the sheet-shaped molded body according to the embodiment of the present invention is not particularly limited, but is preferably 0.1 to 10 mm and more preferably 0.2 to 5 mm.

In the present invention, from the reason that the water resistance is better, a swelling ratio of the sheet-shaped molded body is preferably 0% to 450% and more preferably 0% to 100%.

Here, the swelling ratio can be obtained by immersing the sheet-shaped molded body in water for 24 hours and using the following expression.

$$\text{Swelling ratio (\%)} = (\text{Mass after immersion} - \text{Mass before immersion}) / \text{Mass before immersion} \times 100$$

As the swelling ratio is higher, the water resistance is lower because the number of crosslinks is small, and as the swelling ratio is lower, the water resistance is higher because the number of crosslinks is large.

In the present invention, from the reason that the water resistance is better, a mass reduction rate of the sheet-shaped molded body is preferably 0% to 15% and more preferably 0% to 8%.

Here, the mass reduction rate can be obtained by immersing the sheet-shaped molded body in water for 24 hours, drying at room temperature (23°C) for 48 hours, and using the following expression.

$$\text{Mass reduction rate (\%)} = (\text{Mass before immersion} - \text{Dry mass after immersion}) / \text{Mass before immersion} \times 100$$

As the mass reduction rate is higher, the water resistance is lower because elution of the plasticizer is large, and as the mass reduction rate is lower, the water resistance is higher because elution of the plasticizer is small.

In the present invention, from the reason that processability is excellent, an initial elastic modulus of the sheet-shaped molded body is preferably 15 to 60 MPa and more preferably 25 to 55 MPa.

Here, the initial elastic modulus can be obtained by cutting a sheet conditioned at 25°C 50 %RH for 24 hours into a width of 5 mm and a length of 70 mm, creating an S-S curve with a measurement of a chuck-to-chuck distance of 30 mm and a tensile speed of 30 mm/min using a constant speed elongation type tensile tester, and calculating an elastic modulus (unit: MPa) at the point of maximum inclination in the very initial stage.

As the initial elastic modulus is higher, the sheet-shaped molded body is less likely to be deformed because the sheet-shaped molded body is harder, and as the initial elastic modulus is lower, the sheet-shaped molded body is easily deformed because the sheet-shaped molded body is softer.

[Manufacturing method of sheet-shaped molded body]

A manufacturing method of a sheet-shaped molded body according to an embodiment of the present invention is a manufacturing method including a coating step of applying the above-described composition according to the embodiment of the present invention to form a coating film and a drying step of drying the coating film after the coating step to form a sheet-shaped molded body.

[Coating step]

A coating method in the above-described coating step is not particularly limited, and examples thereof include a spin coating method, an air knife coating method, a curtain coating method, a roller coating method, a wire bar coating method, a gravure coating method, and a die coating method.

A coating amount is preferably adjusted such that a sheet-shaped molded body having a desired thickness can be manufactured.

[Drying step]

A method for drying the coating film in the drying step is not particularly limited, and examples thereof include methods such as natural drying, blast drying, hot air drying, UV drying, hot roll drying, and infrared drying.

[Artificial leather]

An artificial leather according to an embodiment of the present invention is an artificial leather containing a nonwoven fabric and a polypeptide, a fibrous substance other than the polypeptide, and a plasticizer, which are applied to the nonwoven fabric by using the above-described composition according to the embodiment of the present invention.

Here, a method for applying the polypeptide, the fibrous substance other than the polypeptide, and the plasticizer to the nonwoven fabric is not particularly limited, and examples thereof include a method in which the coating step and the drying step in the above-described manufacturing method of a sheet-shaped molded body according to the embodiment of the present invention are included.

[Nonwoven fabric]

As the nonwoven fabric, fibers made of polyester, polypropylene, polyacrylonitrile, polyethylene, polyamide, and the like may be used singly or in combination.

Examples of a method for manufacturing the nonwoven fabric include an electric field spinning method, a composite melt spinning method, a melt blowing method, and a chemical vapor deposition (CVD) method, and among these, an electric field spinning method is preferable.

For applications other than the artificial leather and the synthetic leather, the coating liquid can be used as a paint to obtain a leather-like surface.

Examples

Hereinafter, the present invention will be described in more detail with reference to Examples. The materials, amounts used, proportions, treatment details, treatment procedures, and the like described in the following examples can be appropriately modified as long as the gist of the invention is maintained. Accordingly, the scope of the present invention is not limited to the following Examples.

[Example 1]

1.25 g of carbon black (manufactured by Orion Engineered Carbons, NIPEX170) was added to 100 mL of purified water, and the solution was stirred with a stirrer equipped with an ultrasonic wave for 10 minutes.

Next, 15 g of gelatin (manufactured by FUJIFILM Wako Chemical Corporation) as a polypeptide was added to the solution, and the solution was heated and stirred at 90°C to dissolve the gelatin.

Next, 10.0 g of glycerol as a plasticizer, 0.5 g of fats and oils (manufactured by TAIKO OIL CHEM. Co., Ltd., TAIKO OIL S-37), 20.0 g of an aqueous solution containing 5% cellulose nanofibers (manufactured by MORI MACHINERY CORPORATION, CellFim C-100) as a fibrous compound, 0.015 g of an antibacterial agent (manufactured by Bauer Handels GmbH, MORTANOL 30), and 0.45 g of a tanning agent (manufactured by SILVA, Brancotan CAT) as a crosslinking agent were added to the solution, and the mixture was thoroughly stirred to prepare a uniform dispersion liquid (coating liquid 1).

The prepared coating liquid 1 was poured into an aluminum bat (inside size: 18 × 24 cm) and air-dried at 25°C and 50 %RH for 7 days to produce a sheet-shaped molded body 1 according to the embodiment of the present invention.

[Example 2]

A sheet-shaped molded body was produced in the same manner as in Example 1, except that 20 g of the 5% cellulose nanofiber aqueous solution was changed to 50 g of 2% cellulose nanofiber aqueous solution manufactured by SUGINO MACHINE LIMITED (BiNFi-S IMa-10002) and 100 mL of purified water was changed to 70 mL of purified water.

[Example 3]

A sheet-shaped molded body was produced in the same manner as in Example 1, except that 20 g of the 5% cellulose nanofiber aqueous solution was changed to 50 g of 2% cellulose nanofiber aqueous solution manufactured by SUGINO MACHINE LIMITED (BiNFi-S WMa-10002) and 100 mL of purified water was changed to 70 mL of purified water.

[Example 4]

A sheet-shaped molded body was produced in the same manner as in Example 1, except that 15 g of gelatin was changed to a mixture of 13.5 g of gelatin (manufactured by FUJIFILM Wako Chemical Corporation) and 1.5 g of a recombinant protein (manufactured by FUJIFILM Corporation, cellnest human type I collagen-like recombinant protein).

[Example 5]

The coating liquid 1 was applied to a nonwoven fabric (manufactured by TORAY INDUSTRIES, INC., Ecsine Genuine Leather Style ECS-DCG-KN) and air-dried at 25°C and 50 %RH for 7 days to produce a sheet-shaped molded body.

[Example 6]

A sheet-shaped molded body was produced in the same manner as in Example 1, except that 20 g of the 5% cellulose nanofiber aqueous solution was changed to 50 g of 2% cellulose nanofiber aqueous solution manufactured by SUGINO MACHINE LIMITED (BiNFi-S FMa-10002) and 100 mL of purified water was changed to 70 mL of purified water.

[Example 7]

A sheet-shaped molded body was produced in the same manner as in Example 1, except that 20 g of the 5% cellulose nanofiber aqueous solution was changed to 100 g of 1% TEMPO oxidized cellulose nanofiber dispersion liquid "Cellenpia TC-01A" manufactured by NIPPON PAPER INDUSTRIES CO., LTD. and 100 mL of purified water was changed to 50 mL of purified water.

[Example 8]

A sheet-shaped molded body was produced in the same manner as in Example 1, except that 20 g of the 5% cellulose nanofiber aqueous solution was changed to 50 g of 2% cellulose nanofiber aqueous solution manufactured by SUGINO MACHINE LIMITED (BiNFi-S AMa-10002) and 100 mL of purified water was changed to 70 mL of purified water.

[Comparative Example 1]

A sheet-shaped molded body was produced in the same manner as in Example 1, except that the 5% cellulose nanofiber aqueous solution was not added.

[Comparative Example 2]

A sheet-shaped molded body was produced in the same manner as in Example 1, except that 1 g of cellulose fine particles (manufactured by DAITO KASEI, CELLULOBEADS D-5) instead of the 5% cellulose nanofiber aqueous solution.

[Evaluation]

[Average fiber diameter and average fiber length]

With regard to the fibrous compounds (cellulose nanofibers) used in Examples 1 to 8 and the cellulose fine particles used in Comparative Example 2, the average fiber diameter and the average fiber length were measured by the methods described above. The results are shown in Table 1 below.

[Arithmetic average roughness Ra]

In addition, with regard to the sheet-like molded bodies produced in Examples 1 to 8 and Comparative Examples 1 and 2, using a shape analysis laser microscope (VK-8710 manufactured by Keyence Corporation), the arithmetic average roughness Ra of a smoothed surface was measured. The results are shown in Table 1 below.

[Glossiness]

Further, with regard to the sheet-like molded bodies produced in Examples 1 to 8 and Comparative Examples 1 and 2, using a microtrigloss glossmeter manufactured by BYK, glossiness was measured under the conditions of 85° incidence/85° reflection.
In addition, the degree of matt tone was evaluated based on the following standards from the measured glossiness.
The results are shown in Table 1 below.

A: 0.1 or more and less than 7.0
B: 7.0 or more and less than 12.0
C: 12.0 or more and less than 14.0
D: 14.0 or more and less than 16.0
E: 16.0 or more and less than 99.0

[Table 1]

| | Fibrous compound | Average fiber diameter (μm) | Average fiber length (μm) | Aspect ratio | Ra (μm) | Glossiness (%) | Evaluation of glossiness |
|---|---|---|---|---|---|---|---|
| Example 1 | CellFim C-100 | 0.12 | 100 | 830 | 6.0 | 4.3 | A |
| Example 2 | BiNFi-s IMa-10002 | 0.035 | 5 | 140 | 6.2 | 9.0 | B |
| Example 3 | BiNFi-s WMa-10002 | 0.035 | 4 | 110 | 4.0 | 10.9 | B |
| Example 4 | CellFim C-100 | 0.12 | 100 | 830 | 6.1 | 4.0 | A |
| Example 5 | CellFim C-100 | 0.12 | 100 | 830 | 6.2 | 3.8 | A |
| Example 6 | BiNFi-s FMa-1002 | 0.035 | 0.9 | 26 | 2.5 | 15.4 | D |
| Example 7 | TC-01A | 0.003 | 0.5 | 167 | 3.0 | 13.3 | C |
| Example 8 | BiNFi-s AMa-10002 | 0.035 | 2 | 57 | 2.9 | 13.8 | C |
| Comparative Example 1 | None | - | - | - | 1.5 | 20.0 | E |

(continued)

| | Fibrous compound | Average fiber diameter (μm) | Average fiber length (μm) | Aspect ratio | Ra (μm) | Glossiness (%) | Evaluation of glossiness |
|---|---|---|---|---|---|---|---|
| Comparative Example 2 | Cellulose nanoparticles CELLULOBEADS D-5 | 5 | 5 | 1 | 1.9 | 17.0 | E |

From the results shown in Table 1, in a case where the fibrous compound was not contained, it was found that a matt tone of the leather surface could not be realized regardless of the presence or absence of cellulose fine particles (Comparative Examples 1 and 2).

On the other hand, in a case where the polypeptide, the fibrous substance other than the polypeptide, and the plasticizer were contained, it was found that an excellent matt tone of the leather surface in a case of being used as a synthetic leather or an artificial leather could be realized (Examples 1 to 8).

In particular, from the comparison between Examples 1 to 4 and Example 7, in a case where the average fiber length of the fibrous compound was 2 to 500 μm, it was found that more excellent matt tone of the leather surface could be realized.

In addition, from the comparison between Examples 1 to 4 and Example 8, in a case where the aspect ratio of the fibrous compound was 100 or more, it was found that more excellent matt tone of the leather surface could be realized.

In addition, from the comparison between Example 1 and Example 4, in a case where the recombinant protein was used in a part of the polypeptide, it was found that still more excellent matt tone of the leather surface could be realized.

In addition, from the comparison between Example 1 and Example 5, in a case where the polypeptide, the fibrous substance, and the plasticizer were applied to the nonwoven fabric, it was found that still more excellent matt tone of the leather surface could be realized and it was found to be suitable as an artificial leather.

[Example 9]

A sheet-shaped molded body was produced in the same manner as in Example 1, except that 0.45 g of the tanning agent as a crosslinking agent was changed to 1,3-bis(vinylsulfonylacetamide)propane (manufactured by FUJIFILM Corporation, VS-C) [in Table 2 below, abbreviated as "Vinyl sulfone"].

[Example 10]

A sheet-shaped molded body was produced in the same manner as in Example 1, except that 0.45 g of the tanning agent as a crosslinking agent was changed to a mixture of 0.34 g of 1,2-bis(vinylsulfonylacetamide)ethane (manufactured by FUJIFILM Corporation, VS-B) and 0.11 g of 1,3-bis(vinylsulfonylacetamide)propane (manufactured by FUJIFILM Corporation, VS-C) [in Table 2 below, abbreviated as "Vinyl sulfone mixture"].

[Example 11]

A sheet-shaped molded body was produced in the same manner as in Example 1, except that 0.45 g of the tanning agent as a crosslinking agent was changed to 0.45 g of 2,4-dichloro-hydroxy-1,3,5-triazine monosodium [in Table 2 below, abbreviated as "Triazine"].

[Example 12]

A sheet-shaped molded body was produced in the same manner as in Example 9, except that 10.0 g of glycerol as a plasticizer was changed to 10.0 g of diglycerol (manufactured by Sakamoto Yakuhin Kogyo Co., Ltd., Diglycerin 801).

[Example 13]

A sheet-shaped molded body was produced in the same manner as in Example 9, except that 10.0 g of glycerol as a plasticizer was changed to 10.0 g of triglycerol (manufactured by Sakamoto Yakuhin Kogyo Co., Ltd., PGL-S).

[Example 14]

A sheet-shaped molded body was produced in the same manner as in Example 9, except that 10.0 g of glycerol as a plasticizer was changed to 10.0 g of polyglycerol (manufactured by Sakamoto Yakuhin Kogyo Co., Ltd., Polyglycerin #500).

[Example 15]

A sheet-shaped molded body was produced in the same manner as in Example 9, except that 10.0 g of glycerol as a plasticizer was changed to 10.0 g of tritolyl phosphate (manufactured by FUJIFILM Wako Chemical Corporation).

[Example 16]

A sheet-shaped molded body was produced in the same manner as in Example 9, except that 10.0 g of glycerol as a plasticizer was changed to 10.0 g of dibutyl phthalate (manufactured by FUJIFILM Wako Chemical Corporation).

[Example 17]

The coating liquid was air-dried at 25°C and 50 %RH for 7 days in the same manner as in Example 12 to produce a sheet-shaped molded body, except that the coating liquid was applied to a nonwoven fabric (manufactured by TORAY INDUSTRIES, INC., Ecsine Genuine Leather Style ECS-DCG-KN).

[Evaluation]

In a case where glossiness was of the sheet-like molded bodies produced in Examples 9 to 17 was evaluated by the same method as in Example 1, the same results as in Example 1 were obtained for all sheet-like molded bodies.
In addition, with regard to the sheet-like molded bodies produced in Example 1 and 9 to 17, the swelling ratio, the mass reduction rate, and the initial elastic modulus were measured by the methods described above. An autograph AGS-X manufactured by Shimadzu Corporation was used as a constant speed elongation type tensile tester for measuring the initial elastic modulus.
The results are shown in Table 2 below.

[Table 2]

| | Crosslinking agent | Plasticizer | Glossiness (%) | Evaluation of glossiness | Swelling ratio (%) | Mass reduction rate (%) | Initial elastic modulus (MPa) |
|---|---|---|---|---|---|---|---|
| Example 1 | Tanning agent | Glycerol | 4.3 | A | 400 | 10 | 20 |
| Example 9 | Vinyl sulfone | Glycerol | 4.3 | A | 80 | 10 | 30 |
| Example 10 | Vinyl sulfone mixture | Glycerol | 4.3 | A | 60 | 10 | 35 |
| Example 11 | Triazine | Glycerol | 4.3 | A | 70 | 10 | 33 |
| Example 12 | Vinyl sulfone | Diglycerol | 4.3 | A | 80 | 8 | 35 |
| Example 13 | Vinyl sulfone | Triglycerol | 4.3 | A | 80 | 6 | 40 |
| Example 14 | Vinyl sulfone | Polyglycerol | 4.3 | A | 80 | 5 | 45 |
| Example 15 | Vinyl sulfone | Tritolyl phosphate | 4.3 | A | 80 | 4 | 50 |

(continued)

|  | Crosslinking agent | Plasticizer | Glossiness (%) | Evaluation of glossiness | Swelling ratio (%) | Mass reduction rate (%) | Initial elastic modulus (MPa) |
|---|---|---|---|---|---|---|---|
| Example 16 | Vinyl sulfone | Dibutyl phthalate | 4.3 | A | 80 | 4 | 50 |
| Example 17 | Vinyl sulfone | Diglycerol | 4.3 | A | 80 | 8 | 35 |

From the results shown in Table 2, in a case where the triazine-based compound and the vinyl sulfone-based compound were used as the crosslinking agent, it was found that the swelling ratio was small and the water resistance was excellent (Examples 9 to 17).

In addition, from the comparison between Example 9 and Examples 12 to 16, in the glycerol condensates higher than diglycerol (Examples 12 to 14) and hydrophobic plasticizers such as tritolyl phosphate and dibutyl phthalate (Examples 15 and 16), it was found that elution of the plasticizer was suppressed and the water resistance was excellent.

In addition, from the comparison between Example 9 and Examples 12 to 16, in the compositions using diglycerol or triglycerol as the plasticizer (Examples 12 and 13), it was found that the initial elastic modulus was suppressed, so that processability was excellent while the water resistance was excellent.

## Claims

1. A composition used for a synthetic leather or an artificial leather, the composition comprising:

    a polypeptide;
    a fibrous substance other than the polypeptide; and
    a plasticizer.

2. The composition according to claim 1, further comprising:
    a crosslinking agent.

3. The composition according to claim 2,
    wherein the crosslinking agent is a triazine-based compound or a vinyl sulfone-based compound.

4. The composition according to any one of claims 1 to 3,
    wherein the fibrous substance is nanofibers.

5. The composition according to any one of claims 1 to 4,
    wherein an average fiber length of the fibrous substance is 2 to 500 $\mu$m.

6. The composition according to any one of claims 1 to 5,
    wherein an average fiber diameter of the fibrous substance is 1 to 400 nm.

7. The composition according to any one of claims 1 to 6,
    wherein an aspect ratio of the fibrous substance is 100 or more.

8. The composition according to any one of claims 1 to 7,
    wherein the fibrous substance is cellulose nanofibers.

9. The composition according to any one of claims 1 to 8,
    wherein the polypeptide includes a recombinant protein.

10. The composition according to any one of claims 1 to 9,
    wherein the plasticizer is at least one of diglycerol or triglycerol.

**11.** A sheet-shaped molded body formed of the composition according to any one of claims 1 to 10.

**12.** The sheet-shaped molded body according to claim 11,
wherein an arithmetic average roughness of a surface of the sheet-shaped molded body is 2.0 to 15 $\mu$m.

**13.** An artificial leather comprising:

a nonwoven fabric; and
a polypeptide, a fibrous substance other than the polypeptide, and a plasticizer, which are applied to the nonwoven fabric by using the composition according to any one of claims 1 to 10.

**14.** A manufacturing method of a sheet-shaped molded body, comprising:

a coating step of applying the composition according to any one of claims 1 to 10 to form a coating film; and
a drying step of drying the coating film after the coating step to form a sheet-shaped molded body.

<div align="center">

**INTERNATIONAL SEARCH REPORT**

</div>

| International application No. |
|---|
| PCT/JP2021/019242 |

**A. CLASSIFICATION OF SUBJECT MATTER**
D06N 3/12(2006.01)i; C08K 7/02(2006.01)i; C08L 1/00(2006.01)i; C08L 77/04(2006.01)i; C08L 93/00(2006.01)i
FI: D06N3/12 102; C08L1/00; C08K7/02; C08L93/00; C08L77/04
According to International Patent Classification (IPC) or to both national classification and IPC

**B. FIELDS SEARCHED**

Minimum documentation searched (classification system followed by classification symbols)
D06N1/00-7/06; B32B1/00-43/00; C08K3/00-13/08; C08L1/00-101/14

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2019/172058 A1 (TOAGOSEI CO., LTD.) 12 September 2019 (2019-09-12) claims, paragraphs [0019], [0058], examples | 1-9, 11-14<br>10 |
| Y<br>A | JP 2014-231645 A (MELX CO., LTD.) 11 December 2014 (2014-12-11) claims, paragraphs [0012], [0035]-[0043], [0048], [0075] | 1-9, 11-14<br>10 |
| Y<br>A | JP 57-161172 A (TORAY INDUSTRIES, INC.) 04 October 1982 (1982-10-04) claims | 13<br>1-12, 14 |
| Y<br>A | JP 58-203177 A (KURARAY CO., LTD.) 26 November 1983 (1983-11-26) claims | 13<br>1-12, 14 |

☒ Further documents are listed in the continuation of Box C.  ☒ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 14 July 2021 (14.07.2021) | 27 July 2021 (27.07.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2021/019242 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 6-287867 A (KANTO LEATHER CO., LTD.) 11 October 1994 (1994-10-11) claims, examples<br>claims, examples | 1, 9, 11-12, 14<br>1-3, 9-14<br>4-8 |
| Y<br>A | JP 1-168978 A (KOEI CHEMICAL CO., LTD.) 04 July 1989 (1989-07-04) claims, page 2, upper right column, line 13 | 1-3, 9-14<br>4-8 |
| Y<br>A | JP 2000-290366 A (KONICA CORP.) 17 October 2000 (2000-10-17) claims, paragraph [0013] | 3-14<br>1-2 |
| Y<br>A | JP 62-283143 A (SHIN-ETSU POLYMER CO., LTD.) 09 December 1987 (1987-12-09) claims, page 2, lower left column, line 18 to lower right column, line 18, page 3, upper right column, line 15 | 3, 9-14<br>1-2, 4-8 |
| X<br>A | JP 7-247373 A (AJINOMOTO TAKARA CORP. KK) 26 September 1995 (1995-09-26) claims, paragraphs [0018], [0019], examples | 1-2, 9-14<br>3-8 |

Form PCT/ISA/210 (continuation of second sheet) (January 2015)

**INTERNATIONAL SEARCH REPORT**
Information on patent family members

International application no.

PCT/JP2021/019242

| Patent Documents referred in the Report | Publication Date | Patent Family | Publication Date |
|---|---|---|---|
| WO 2019/172058 A1 | 12 Sep. 2019 | (Family: none) | |
| JP 2014-231645 A | 11 Dec. 2014 | WO 2013/039118 A1 | |
| JP 57-161172 A | 04 Oct. 1982 | (Family: none) | |
| JP 58-203177 A | 26 Nov. 1983 | (Family: none) | |
| JP 6-287867 A | 11 Oct. 1994 | (Family: none) | |
| JP 1-168978 A | 04 Jul. 1989 | (Family: none) | |
| JP 2000-290366 A | 17 Oct. 2000 | (Family: none) | |
| JP 62-283143 A | 09 Dec. 1987 | (Family: none) | |
| JP 7-247373 A | 26 Sep. 1995 | (Family: none) | |

Form PCT/ISA/210 (patent family annex) (January 2015)

**EP 4 159 916 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9076403 A
- JP H09076403 A
- EP 1014176 A2
- US 6992172 B
- WO 200485473 A
- WO 2008103041 A
- JP 5500842 B
- JP 5283050 B
- JP 5207246 B
- JP 5170193 B
- JP 5170153 B
- JP 5099618 B
- JP 4845129 B
- JP 4766484 B
- JP 4724814 B
- JP 4721186 B
- JP 4428521 B
- WO 2011068023 A
- JP 5477265 B
- JP 2014084434 A
- JP 5381338 B
- JP 4981735 B
- JP 5404131 B
- JP 5329279 B
- JP 5285197 B
- JP 5179616 B
- JP 5178931 B
- JP 5330882 B
- JP 5397910 B

20